# EUROPEAN PATENT APPLICATION

(11) **EP 4 383 118 A1**
(43) Date of publication of application: **12.06.2024**
(21) Application number: 23214431.1
(22) Date of filing: 05.12.2023
(51) Int. Cl.: G06F 30/28, G06F 111/10, G06F 113/02

(54) **METHODS AND SYSTEMS FOR ASSESSING PERFORMANCE OF COOLERS IN AN IT ROOM**

(30) Priority: 06.12.2022 US 202263386229 P; 01.12.2023 US 202318526777
(71) Applicant: Schneider Electric IT Corporation, Foxboro, MA 02035 (US)
(72) Inventor: VanGilder, James William, ANDOVER, 01810 (US); Condor, Michael B., ANDOVER, 01810 (US)
(74) Representative: Plasseraud IP

(57) **Abstract**

In one aspect, a non-transitory computer readable media has instructions encoded therein which, when executed by a computer processing system, cause the computer processing system to perform a method comprising receiving information indicative of coolers and information technology (TT) racks in an IT room, displaying a representation of the coolers and IT racks in a graphical user interface (GUI) of a computer system, performing a computational fluid dynamics (CFD) analysis to calculate results including airflow patterns, temperatures, and pressures in the IT room, determining, based on the CFD results, a load on each cooler in the IT room, and for each of the coolers in the IT room, displaying a graphical indication for the representation of each respective cooler of whether a Cooling Efficiency metric for that cooler is in a first or a second state based on the load on that cooler.

## Description

### TECHNICAL FIELD

At least one example in accordance with the present disclosure relates generally to systems and methods for determining and displaying metrics regarding the efficiency with which cooling units in a data center provide cooling to information technology equipment within the data center.

### BACKGROUND

Centralized information technology (IT) rooms or data centers for computer, communications, and other electronic equipment contain numerous equipment racks of equipment that require power, cooling, and connections to external communications facilities. Electronic equipment contained in the equipment racks generate substantial heat and accordingly typical equipment racks use air flow through the racks to cool the electronic equipment. In the design or optimization of the arrangement of equipment in an IT room, computational fluid dynamics (CFD) analysis may be utilized to determine the air temperatures, pressures, and velocities and related physical parameters throughout the IT room for a given proposed arrangement of equipment. Different possible equipment arrangements may be analyzed utilizing CFD to determine an equipment arrangement that results in optimized airflows and temperatures throughout the IT room.

### BRIEF DESCRIPTION OF THE DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a block diagram of one example of a computer system with which various aspects and embodiments disclosed herein may be implemented;
FIG. 2 is a schematic of one example of a distributed system including an IT room management system;
FIG. 3 illustrates one example of a graphical display of information regarding equipment in an IT room that may be produced by aspects and embodiments disclosed herein;
FIG. 4A illustrates one example of a link that may be included in a graphical display such as illustrated in FIG. 3 that may be selected by a user to obtain an indication of overall efficiency of a modelled IT room;
FIG. 4B illustrates one example of a popup window that may be presented in the graphical display response to a user selecting the link of FIG. 4A;
FIG. 5A illustrates one example of a popup window that may be presented in a graphical display such as illustrated in FIG. 3 when an image of cooler modelled as having unlimited capacity is in a warning state due to experiencing a low load is selected;
FIG. 5B illustrates one example of a popup window that may be presented in a graphical display such as illustrated in FIG. 3 when an image of cooler modelled as having unlimited capacity is in a warning state due to experiencing a high load is selected;
FIG. 5C illustrates one example of a popup window that may be presented in a graphical display such as illustrated in FIG. 3 when an image of cooler modelled as having a specified capacity is in a warning state due to experiencing a low load is selected;
FIG. 5D illustrates one example of a popup window that may be presented in a graphical display such as illustrated in FIG. 3 when an image of cooler modelled as having a specified capacity is in a warning state due to experiencing a high load is selected;
FIG. 6 is one example of a flowchart of a process for performing assessments of coolers in a modelled IT room;
FIG. 7 illustrates one example of a graphical display of information regarding a cooler cooling check that may be produced by aspects and embodiments disclosed herein;
FIG. 8 is one example of a flowchart of a method of computing cooling efficiency in accordance with aspects and embodiments disclosed herein;
FIG. 9 is one example of a schematic diagram of a portion of a data center model with IT equipment terminals explicitly represented in CFD;
FIG. 10 is one example of a flowchart of a method of computing cooling airflow supply efficiency and cooling airflow return efficiency in a data center model in which IT equipment terminals are explicitly represented in CFD;
FIG. 11 illustrates one example of a compact IT rack model;
FIG. 12 is one example of a schematic diagram of a portion of a data center model for calculating cooling airflow supply efficiency and cooling airflow return efficiency in a data center model in which IT equipment is represented by a compact rack model; and
FIG. 13 is one example of a flowchart of a method of computing cooling airflow supply efficiency and cooling airflow return efficiency in a data center model in which IT equipment is represented by compact rack models.

### DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are no intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms.

IT rooms or data centers, the terms being used synonymously herein, may contain one or more types of IT equipment that may manipulate, receive, store, and/or transmit multiple forms of data including, for example, voice or video data. The IT equipment can be housed in IT racks. Instead or in addition, equipment such as power supplies, user interfaces, etc., may be mounted in IT racks in IT rooms. IT rooms may include cooling equipment for the IT equipment. The cooling equipment may be mounted in racks along with the IT equipment or provided as one or more separate units, sometimes referred to as computer room air conditioner (CRAC) units.

Systems and methods disclosed herein provide for airflows through equipment racks in an IT room and associated air temperatures and pressures to be modelled on a computer as well as for the efficiencies with which cooling equipment provides cooling to the IT racks and equipment in the IT room. The systems may include graphical user interfaces including displays configured to illustrate the modelled air temperatures, pressures, and velocities, and cooling efficiencies in the IT room as well as one or more metrics regarding performance of the IT room cooling equipment. As a result of the model and generated display, airflow systems for equipment racks can be designed and implemented in existing IT rooms and/or during the design of new IT rooms and/or equipment within the IT room, for example, IT racks, equipment within IT racks, and cooling systems may be relocated or rearranged and/or have operating parameters adjusted to obtain desired temperatures of the IT equipment and cooling equipment efficiencies.

Various computing devices may execute various operations discussed above. Using data stored in associated memory, in one example, a computer executes one or more instructions stored on one or more non-transitory computer-readable media that may result in manipulated data. In some examples, the computer may include one or more processors or other types of computing hardware. In one example, the computing hardware is or includes a commercially available, general-purpose processor. In another example, the computer performs at least a portion of the operations discussed herein using an application-specific integrated circuit (ASIC) tailored to perform particular operations in addition to, or in lieu of, a general-purpose processor. As illustrated by these examples, aspects and embodiments disclosed herein may perform the operations described herein using many specific combinations of hardware and software and the aspects and embodiments disclosed herein are not limited to any particular combination of hardware and software components.

In various examples, a computer may implement a multi-threading process to execute operations discussed above. For example, while a first thread of the computer may perform operations including determining airflows in an equipment rack, a second thread of the computer may calculate one or more variables associated with airflow models discussed herein. In at least one embodiment, a computer contained within an IT room management system is configured to model IT room cooling equipment efficiencies as well as one or more cooling equipment metrics using methods described herein. Further, in at least one example, the IT room management system may monitor and control airflows in IT rooms equipment racks based on results generated by the system. Based on model results, IT room cooling systems, including cooling components contained in equipment racks, may be controlled by the IT room management system to improve overall cooling or cooling efficiency in an IT room.

Aspects disclosed herein in accordance with the present embodiments are not limited in their application to the details of construction and the arrangement of components set forth in the following description or illustrated in the drawings. These aspects are capable of assuming other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiments.

For example, according to aspects and embodiments disclosed herein, a computer system is configured to perform any of the functions described herein, including but not limited to, configuring, modeling, and presenting information regarding specific IT room configurations. The computer system may present the information to a user as a display of one or more of airflow, temperatures, cooling equipment efficiencies and related physical parameters or metrics (e.g., pressures, perforated-tile airflow rates, capture indices, etc.) in a portion or throughout an IT room in a graphical user interface. Further, computer systems in embodiments may receive input from a user and/or directly from physical sensors in the data center that automatically measure environmental parameters in an IT room. The computer system may control equipment, such as chillers or coolers to optimize performance and/or efficiency. Moreover, the systems described herein may be configured to include or exclude any of the functions discussed herein. Thus, the embodiments are not limited to a specific function or set of functions. Also, the phraseology and terminology used herein is for the purpose of description and should not be regarded as limiting. The use herein of "including," "comprising," "having," "containing," "involving," and variations thereof is meant to encompass the items listed thereafter and equivalents thereof as well as additional items.

### Computer System

Various aspects and functions described herein in accordance with the present embodiments may be implemented as hardware or software on one or more computer systems. There are many examples of computer systems currently in use. These examples include, among others, network appliances, personal computers, workstations, mainframes, networked clients, servers, media servers, application servers, database servers, and web servers. Other examples of computer systems may include mobile computing devices, such as cellular phones and personal digital assistants, and network equipment, such as load balancers, routers, and switches. Further, aspects in accordance with the present embodiments may be located on a single computer system or may be distributed among a plurality of computer systems connected to one or more communications networks.

For example, various aspects and functions may be distributed among one or more computer systems configured to provide a service to one or more client computers, or to perform an overall task as part of a distributed system. Additionally, aspects may be performed on a client-server or multi-tier system that includes components distributed among one or more server systems that perform various functions. Thus, the embodiments are not limited to executing on any particular system or group of systems. Further, aspects may be implemented in software, hardware, or firmware, or any combination thereof. Thus, aspects in accordance with the embodiments disclosed herein may be implemented within methods, acts, systems, system elements and components using a variety of hardware and software configurations, and the embodiments are not limited to any particular distributed architecture, network, or communication protocol.

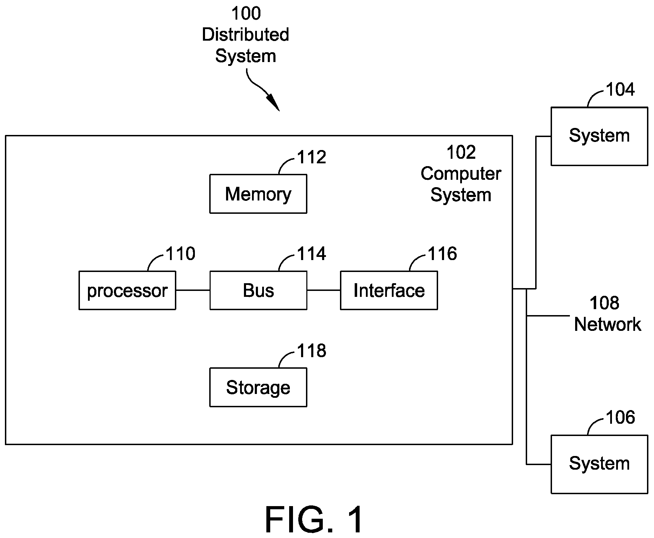

FIG. 1 shows a block diagram of a distributed computer system 100, in which various aspects and functions in accordance with the disclosed embodiments may be practiced. Distributed computer system 100 may include one more computer systems. For example, as illustrated, distributed computer system 100 includes computer systems 102, 104, and 106. As shown, computer systems 102, 104, and 106 are interconnected by, and may exchange data through, communication network 108. Network 108 may include any communication network through which computer systems may exchange data. To exchange data using network 108, computer systems 102, 104, and 106 and network 108 may use various methods, protocols and standards, including, among others, token ring, Ethernet, wireless Ethernet, Bluetooth, TCP/IP, UDP, Http, FTP, SNMP, SMS, MMS, SS7, Json, Soap, and Corba. To ensure data transfer is secure, computer systems 102, 104, and 106 may transmit data via network 108 using a variety of security measures including TLS, SSL, or VPN among other security techniques. While distributed computer system 100 illustrates three networked computer systems, distributed computer system 100 may include any number of computer systems and computing devices, networked using any medium and communication protocol.

Various aspects and functions in accordance with the present embodiments may be implemented as specialized hardware or software executing in one or more computer systems including computer system 102 shown in FIG. 1. As depicted, computer system 102 includes processor 110, memory 112, bus 114, interface 116, and storage 118. Processor 110 may perform a series of instructions that result in manipulated data. Processor 110 may be a commercially available processor such as an Intel Core, Motorola PowerPC, SGI MIPS, Sun UltraSPARC, or Hewlett-Packard PA-RISC processor, but may be any type of processor, multi-processor, microprocessor, or controller as many other processors and controllers are available. Processor 110 is connected to other system elements, including one or more memory devices 112, by bus 114.

Memory 112 may be used for storing programs and data during operation of computer system 102. Thus, memory 112 may be a relatively high performance, volatile, random access memory such as a dynamic random access memory (DRAM) or static memory (SRAM). However, memory 112 may include any device for storing data, such as a disk drive or other non-volatile, non-transitory, storage device. Various aspects and embodiments disclosed herein may organize memory 112 into particularized and, in some cases, unique structures to perform the aspects and functions disclosed herein.

Components of computer system 102 may be coupled by an interconnection element such as bus 114. Bus 114 may include one or more physical busses, for example, busses between components that are integrated within a same machine, but may include any communication coupling between system elements including specialized or standard computing bus technologies such as IDE, SCSI, PCI, and InfiniBand. Thus, bus 114 enables communications, for example, data and instructions, to be exchanged between system components of computer system 102.

Computer system 102 also includes one or more interface devices 116 such as input devices, output devices, and combination input/output devices. Interface devices may receive input or provide output. More particularly, output devices may render information for external presentation. The interface devices 116 may include, for example, one or more graphical user interfaces that may be disposed proximate to or separate from other components of the computer system 102. A graphical user interface of the computer system 102 may, for example, be displayed through a web browser that accesses information from the memory 112. Input devices may accept information from external sources. Examples of interface devices include keyboards, mouse devices, trackballs, microphones, touch screens, printing devices, display screens, speakers, network interface cards, etc. Interface devices allow computer system 102 to exchange information and communicate with external entities, such as users and other systems.

Storage system 118 may include a computer readable and writeable, nonvolatile, non-transitory, storage medium in which instructions are stored that define a program to be executed by the processor. The program to be executed by the processor may cause the processor 110 or computer system 102 to perform any one or more embodiments of the methods disclosed herein. Storage system 118 also may include information that is recorded on or in the medium and this information may be processed by the program. More specifically, the information may be stored in one or more data structures specifically configured to conserve storage space or increase data exchange performance. The instructions may be persistently stored as encoded signals, and the instructions may cause a processor to perform any of the functions described herein. The medium may, for example, be optical disk, magnetic disk, or flash memory, among others. In operation, the processor or some other controller may cause data to be read from the nonvolatile recording medium into another memory, such as memory 112, that allows for faster access to the information by the processor than does the storage medium included in storage system 118. The memory may be located in storage system 118 or in memory 112, however, processor 110 may manipulate the data within the memory 112, and then may copy the data to the medium associated with storage system 118 after processing is completed. A variety of components may manage data movement between the medium and integrated circuit memory element and the presently described embodiments are not limited thereto. Further, the embodiments are not limited to a particular memory system or data storage system. Portions of the memory 112 or storage system 118 may be included in the same computer system as other components of the computer system 102 or may be resident in a cloud-based system that is accessible via the internet or other communications system or protocol.

Although computer system 102 is shown by way of example as one type of computer system upon which various aspects and functions in accordance with the present embodiments may be practiced, any aspects of the presently disclosed embodiments are not limited to being implemented on the computer system as shown in FIG. 1. Various aspects and functions in accordance with the presently disclosed embodiments may be practiced on one or more computers having a different architectures or components than that shown in FIG. 1. For instance, computer system 102 may include specially-programmed, special-purpose hardware, for example, an application-specific integrated circuit (ASIC) tailored to perform a particular operation disclosed herein. While another embodiment may perform the same function using several general-purpose computing devices running MAC OS System X with Motorola PowerPC processors and several specialized computing devices running proprietary hardware and operating systems.

Computer system 102 may be a computer system including an operating system that manages at least a portion of the hardware elements included in computer system 102. Usually, a processor or controller, such as processor 110, executes an operating system which may be, for example, a Windows-based operating system such as Windows NT, Windows 2000 (Windows ME), Windows XP, or Windows Vista operating systems, available from the Microsoft Corporation, a MAC OS System X operating system available from Apple Computer, one of many Linux-based operating system distributions, for example, the Enterprise Linux operating system available from Red Hat Inc., a Solaris operating system available from Sun Microsystems, or a UNIX operating system available from various sources. Many other operating systems may be used, and embodiments are not limited to any particular implementation.

The processor and operating system together define a computer platform for which application programs in high-level programming languages may be written. These component applications may be executable, intermediate, for example, C-, bytecode or interpreted code which communicates over a communication network, for example, the Internet, using a communication protocol, for example, TCP/IP. Similarly, aspects in accord with the presently disclosed embodiments may be implemented using an object-oriented programming language, such as .Net, SmallTalk, Java, C++, Ada, or C# (C-Sharp). Other object-oriented programming languages may also be used. Alternatively, functional, scripting, or logical programming languages may be used.

Additionally, various aspects and functions in accordance with the presently disclosed embodiments may be implemented in a non-programmed environment, for example, documents created in HTML, XML, or other format that, when viewed in a window of a browser program, render aspects of a graphical-user interface or perform other functions. Further, various aspects and embodiments disclosed herein may be implemented as programmed or non-programmed elements, or any combination thereof. For example, a web page may be implemented using HTML while a data object called from within the web page may be written in C++. Thus, the presently disclosed embodiments are not limited to a specific programming language and any suitable programming language could also be used.

A computer system included within an embodiment may perform additional functions outside the scope of the presently disclosed embodiments. For instance, aspects of the system may be implemented using an existing commercial product, such as, for example, Database Management Systems such as SQL Server available from Microsoft of Seattle WA., Oracle Database from Oracle of Redwood Shores, CA, and MySQL from MySQL AB, a subsidiary of Oracle or integration software such as Web Sphere middleware from IBM of Armonk, NY. However, a computer system running, for example, SQL Server may be able to support both aspects in accord with the presently disclosed embodiments and databases for sundry applications.

### Example System Architecture

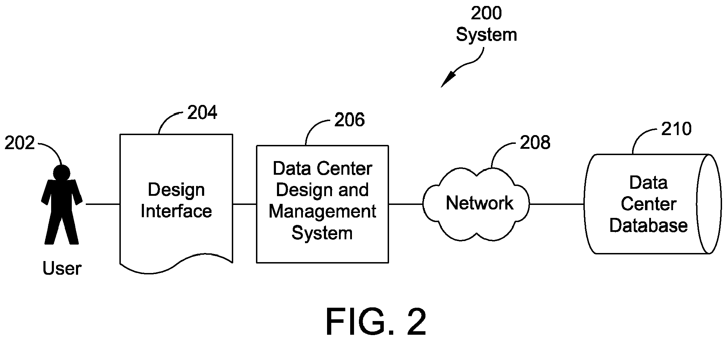

FIG. 2 presents a context diagram including physical and logical elements of distributed system 200. As shown, distributed system 200 is specially configured in accordance with the presently disclosed embodiments. The system structure and content recited with regard to FIG. 2 is for exemplary purposes only and is not intended to limit the embodiments to the specific structure shown in FIG. 2. As will be apparent to one of ordinary skill in the art, many variant system structures can be architected without deviating from the scope of the presently disclosed embodiments. The particular arrangement presented in FIG. 2 was chosen to promote clarity.

Information may flow between the elements, components, and subsystems depicted in FIG. 2 using any technique. Such techniques include, for example, passing the information over the network via TCP/IP, passing the information between modules in memory and passing the information by writing to a file, database, or some other non-volatile storage device. Other techniques and protocols may be used without departing from the scope of the presently disclosed embodiments.

Referring to FIG. 2, system 200 includes user 202, interface 204, IT room design and management system 206, communications network 208, and IT room database 210. System 200 may allow user 202, such as an IT room architect or other IT room personnel, to interact with interface 204 to create or modify a model of one or more IT room configurations. System 200 may allow user 202 to interact with interface 204 to view a graphical display of results of embodiments of models disclosed herein. According to one embodiment, interface 204 may include aspects of the floor editor and the rack editor as disclosed in Patent Cooperation Treaty Application No. PCT/US08/63675, titled "Methods and Systems for Managing Facility Power and Cooling," filed on May 15, 2008,. In other embodiments, interface 204 may be implemented with specialized facilities that enable user 202 to design, in a drag and drop fashion, a model that includes a representation of the physical layout of an IT room or any subset thereof. This layout may include representations of IT room structural components as well as IT room equipment. The features of interface 204, as may be found in various aspects and embodiments disclosed herein, are discussed further below. In at least one embodiment, information regarding an IT room is entered into system 200 through the interface via manual data entry and/or by accessing data from one or more sensors present in an IT room, and assessments and recommendations for the IT room are provided to the user. Further, in at least one embodiment, optimization processes may be performed to optimize cooling performance and energy usage of the IT room.

As shown in FIG. 2, IT room design and management system 206 presents data design interface 204 to user 202. According to one embodiment, IT room design and management system 206 may include the IT room design and management system as disclosed in PCT/US08/63675. In this embodiment, design interface 204 may incorporate functionality of the input module, the display module and the builder module included in PCT/US08/63675 and may use the database module to store and retrieve data.

As illustrated, IT room design and management system 206 may exchange information with IT room database 210 via network 208. This information may include any information needed to support the features and functions of IT room design and management system 206. For example, in one embodiment, IT room database 210 may include at least some portion of the data stored in the IT room equipment database described in PCT/US08/63675. In another embodiment, this information may include any information needed to support interface 204, such as, among other data, the physical layout of one or more IT room model configurations, the production and distribution characteristics of the cooling providers included in the model configurations, the consumption characteristics of the cooling consumers in the model configurations, and a listing of equipment racks and cooling providers to be included in a cluster.

In one embodiment, IT room database 210 may store types of cooling providers, the amount of cool air provided by each type of cooling provider, and a temperature of cool air provided by the cooling provider. Thus, for example, IT room database 210 includes records of a particular type of computer room air conditioning (CRAC) unit that is rated to deliver airflow at the rate of 5,600 cubic feet per minute (cfm) at a temperature of 68 degrees Fahrenheit. In addition, the IT room database 210 may store one or more cooling metrics, such as inlet and outlet temperatures of the CRACs and inlet and exhaust temperatures of one or more equipment racks. The temperatures may be periodically measured and input into the system, or in other embodiments, the temperatures may be continuously monitored using devices coupled to the system 200.

IT room database 210 may take the form of any logical construction capable of storing information on a computer readable medium including, among other structures, flat files, indexed files, hierarchical databases, relational databases or object oriented databases. The data may be modeled using unique and foreign key relationships and indexes. The unique and foreign key relationships and indexes may be established between the various fields and tables to ensure both data integrity and data interchange performance.

The computer systems shown in FIG. 2, which include IT room design and management system 206, network 208, and IT room equipment database 210, each may include one or more computer systems. As discussed above with regard to FIG. 1, computer systems may have one or more processors or controllers, memory and interface devices. The particular configuration of system 200 depicted in FIG. 2 is used for illustration purposes only and aspects and embodiments disclosed herein may be practiced in other contexts. Thus, aspects and embodiments disclosed herein are not limited to a specific number of users or systems.

Aspects and embodiments disclosed herein include methods of computational fluid dynamics analyses used to determine environmental parameters within a proposed or existing IT room, for example, air temperatures, pressures, and velocities throughout the IT room, in overhead or under-floor plenums of the IT room, and/or within equipment in the IT room, for example, within racks in the IT room as well, as the efficiency and other operational parameters of cooling systems for the IT room. These methods may be performed on embodiments of the computer systems disclosed herein and may be represented by code recorded on non-volatile, non-transitory computer readable medium that may be read by embodiments of the computer systems disclosed herein.

Computational fluid dynamics analysis typically involves overlying a computational grid on a computational representation of a space to be analyzed and breaking the model of the space into a number of volumetric units (or two-dimensional units for two-dimensional CFD analyses) referred to as grid cells. The model is assigned an initial state, for example, with the temperature and pressure of all grid cells within the model set at ambient temperature and pressure with no initial air flow between cells. The analysis then proceeds to determine the air and heat flows consistent with the governing laws of conservation of mass, momentum and energy applied to all grid cells. The solution process terminates when all conservation equations have been adequately satisfied and the simulation reaches a steady-state or has covered a physical time period as indicated by the user. One example of a commercially available program capable of performing computational fluid dynamics analysis of airflows and temperatures within a data center is EcoStruxure^{™} IT Advisor CFD (ITA CFD) from Schneider Electric.

This brief description of CFD analysis is provided for background and is highly simplified. Those of skill in the art would be aware of additional complexities and factors that would be included in a CFD analysis for different implementations.

One challenge in data center cooling is to ensure that all IT equipment inlet temperatures remain below a target threshold, e.g., as defined by the ASHRAE Thermal Guidelines. A second challenge in data center cooling is to minimize the energy consumed by the cooling equipment. Aspects and embodiments of systems and methods disclosed herein address, among other things, this second challenge by determining and displaying various IT room efficiency metrics, including an overall IT room Cooling Airflow Efficiency metric along with the sub-metrics Cooler ΔT Check or Cooler Cooling Efficiency, the Cooling Airflow Supply Efficiency, and the Cooling Airflow Return Efficiency. Different embodiments disclosed herein may utilize or calculate different metrics or may calculate different metrics in different ways. The overall IT room Cooling Efficiency metric is assessed as "good" or "warning" and, in some embodiments, this assessment is made based on whether each cooler in the IT room exhibits a Cooler Cooling Efficiency metric that is assesses as "good" or "warning".

In other embodiments, the overall IT room Cooling Efficiency metric is a composite metric that includes the Cooler ΔT Check sub-metric. The Cooler ΔT Check is also assessed as "good" or "warning" but on an individual-cooler basis. The overall IT room Cooling Efficiency may optionally further be based on the Cooling Airflow Supply Efficiency, and/or the Cooling Airflow Return Efficiency metrics. In this case, all metrics to be assessed are first assessed relative to their own thresholds and with the worst-case ("good" or "warning") rolled-up into the parent metric. For example, to receive a "good" assessment for the overall IT room Cooling Efficiency each cooler being evaluated must receive a "good" Cooler ΔT Check assessment and all other data-center-level metrics assessed must receive a "good" assessment.

Each sub-metric comprising overall IT room Cooling Efficiency provides insight into different aspects of "efficiency." The Cooler ΔT Check warns the user if an individual (or multiple) coolers are underutilized; such coolers could possibly be turned off to yield energy savings or the cooling architecture could be modified so that all cooling units are more evenly utilized. The Cooling Airflow Supply Efficiency, *η_{S}*, and the Cooling Airflow Return Efficiency, *η_{R}*, measure the overall fraction of IT airflow directly supplied to IT equipment inlets or directly captured from IT equipment exhausts, respectively. As such, these metrics provide high-level assessments of how efficiently the total available cooling airflow is being utilized both on the cooling supply and return sides.

Aspects and embodiments of systems and methods disclosed herein also, in some embodiments, determine and display a Cooler Cooling Check metric which is a cooler-level assessment graphically displayed as a "good" or "warning" icon on each cooling unit in the system GUI. While the Cooler Cooling Check includes the Cooler ΔT Check assessment (which is also included in the overall IT room Cooling Efficiency), its primary purpose is to alert the CFD user to the fact that one or more operational parameters including the average return temperature, the supply temperature, and pressure drop are outside the normal expected operating range or otherwise warrant additional scrutiny.

In other embodiments, instead of assessing a Cooler Cooling Check metric for cooling units in an IT room, each cooler may have it own Cooling Efficiency metric assessed. The cooler-level Cooling Efficiency assessment may also be graphically displayed as a "good" or "warning" icon on each cooling unit in the system GUI. The cooler-level Cooling Efficiency may be based on load to a cooler and/or be based on whether the cooler is capable of supplying cool air at a desired temperature. A cooler may be assessed as exhibiting a "good" cooling efficiency if the cooler is operating at a load above a particular lower threshold, for example, a load associated with a ΔT of 5°C or more across the cooler while having sufficient capacity to meet a specified supply temperature. A cooler may be assessed as exhibiting a cooling efficiency in a "warning" regime if the cooler is operating at a load below the particular lower threshold, a load above a particular upper threshold, or if the cooler has insufficient capacity to meet a specified supply temperature. Coolers may be modelled as having unlimited capacity, in which instance a determination is made if the cooler is operating at a load between the lower and upper thresholds to make the cooler Cooling Efficiency assessment. Coolers may alternatively be modelled as having a specified capacity, in which instance a determination is made if the cooler is operating at a load above the lower threshold and has sufficient capacity to meet the specified supply temperature to make the cooler Cooling Efficiency assessment.

Aspects and embodiments of systems and methods disclosed herein may be utilized to assess the airflow efficiency of data center cooling architectures and operating conditions as simulated in CFD. As discussed above, the high-level metric, the overall IT room Cooling Efficiency, evaluates the cooling performance of the entire data center as "good" or "warning" and is comprised of the Cooler ΔT Check or cooler Cooling Efficiency cooler-by-cooler metric and, optionally, additional sub-metrics such as the Cooling Airflow Supply Efficiency and Cooling Airflow Return Efficiency. The overall IT room Cooling Efficiency assessment is determined from the worst-case assessment of all sub-metrics included in its assessment.

The Cooling Airflow Supply Efficiency and Cooling Airflow Return Efficiency may be utilized as independent metrics as well as sub-metrics of overall IT room Cooling Efficiency. The Cooling Airflow Supply Efficiency and Cooling Airflow Return Efficiency assess, at a data-center level, the efficiency with which cooling airflow is supplied directly to IT equipment inlets and captured directly from IT equipment exhausts, respectively. Both metrics provide a quantitative evaluation from 0% (worst) to 100% (best) and may be assessed as "good" or "warning" relative to a designated threshold.

The overall IT room Cooling Efficiency, the Cooling Airflow Supply Efficiency, and the Cooling Airflow Return Efficiency metrics all assess the cooling performance at the data-center level and may be used to compare cooling setpoints, cooling architectures, and entire data centers. The overall IT room Cooling Efficiency is the highest-level metric as it provides an answer to the question, "how efficiently is my data center cooled?" The Cooling Airflow Supply Efficiency and Cooling Airflow Return Efficiency drill down with quantitative assessments into how efficiently cooling airflow is supplied or returned.

The Cooling Unit Metrics determined and displayed by aspects and embodiments of the system and method disclosed herein provide for assessment of the efficiency with which the cooling systems (also referred to herein as "coolers") of an IT room provide cooling to the IT equipment in the IT room, as well as other operational aspects related to the cooling systems. As disclosed above, the composite overall IT room Cooling Efficiency metric is a data-center-wide assessment composed of the sub-metric Cooler ΔT Check or cooler Cooling Efficiency and, optionally, other efficiency-focused metrics including the Cooling Airflow Supply Efficiency and the Cooling Airflow Return Efficiency. For example, in embodiments utilizing the Cooler ΔT Check metric, a cooler ΔT less than 10°C or less than 5°C, a cooler ΔT greater than 20°C, or Cooling Airflow Supply Efficiency/Cooling Airflow Return Efficiency less than 90% may be assessed as "warning." The Cooler Cooling Check (either the Cooler ΔT Check or the cooler Cooling Efficiency check) is analogous to the IT Rack Cooling Check of U.S. Patent Application Serial No. 17/457,468 in the way assessments are displayed as icons on all equipment; however, the former is assessed as either "good" or "warning" rather than "good," "marginal," or "bad" like the latter. Whereas the IT Rack Cooling Check assesses maximum IT inlet temperatures and internal airflow patterns associated with each rack, the Cooler Cooling Check includes the Cooler ΔT Check or cooler Cooling Efficiency check and, optionally, average return temperature, supply temperature, pressure drop, and other operational characteristics associated with each cooler. The cooler ΔT metric for each cooler is, in some embodiments, assessed as part of both the (data-center-level) overall IT room Cooling Efficiency and the (cooler-level) Cooler Cooling Check. In other embodiments, the cooler Cooling Efficiency check is used to evaluate the overall IT room Cooling Efficiency and the Cooler Cooling Check instead of the cooler ΔT metrics.

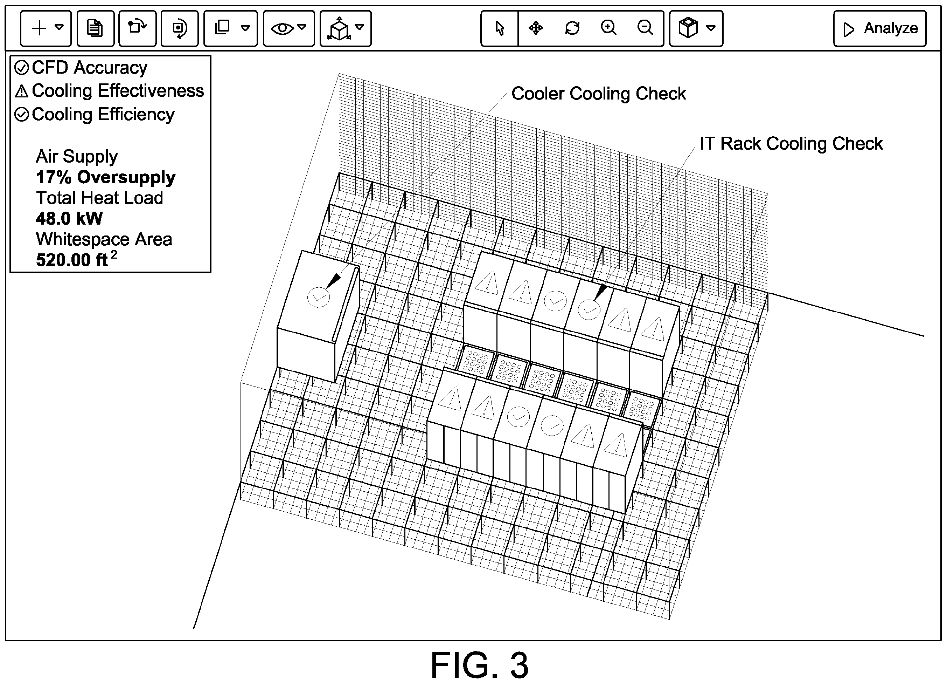

Aspects and embodiments disclosed herein may display a "dashboard," for example, the dashboard of EcoStruxure^{™} IT Advisor CFD modified to include the cooling system metrics disclosed herein. The dashboard provides high-level results to a user in a simple, easily understood graphical representation. An example of the dashboard displayed by some aspects and embodiments disclosed herein is illustrated in FIG. 3.

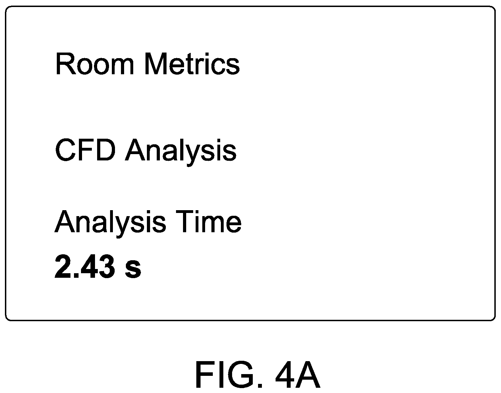

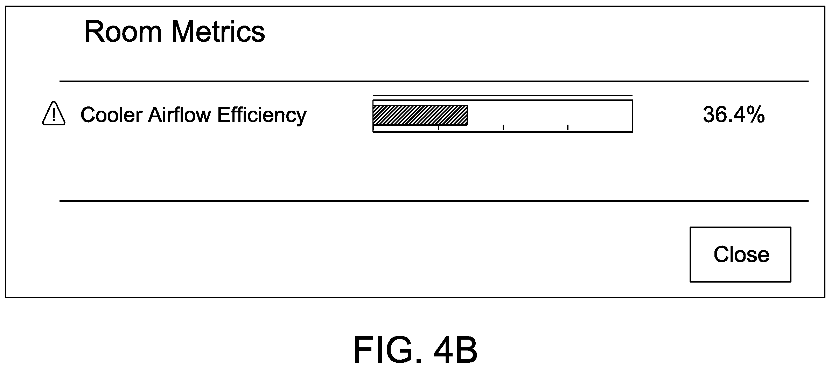

In addition to the features illustrated in the dashboard GUI of FIG. 3, the GUI may further include a link to access a summary of an overall airflow efficiency metric for the coolers in the modelled data center. An example of such a link is the "Room Metrics" link shown in FIG. 4A. In some embodiments, a "Room Metrics" link or the like is provided in place of the "Cooling Efficiency" link in the example dashboard GUI of FIG. 3. If a user were to select this link the GUI may present the user with a popup window such as illustrated in FIG. 4B which provides the user with a metric regarding overall Cooler Airflow Efficiency in the modelled IT room. The Cooler Airflow Efficiency is an assessment of how much of the overall cooler airflow reaches IT inlets directly or is scavenged directly from IT exhausts.

The high-level questions the user should have in assessing a CFD analysis of an IT room include:
1. Is the CFD analysis accurate (i.e., can it be trusted)?
2. How well is the data center cooled (i.e., regardless of how much cooling airflow is used, are all IT equipment effectively cooled)?
3. How efficiently is the data center cooled (i.e., is the limited cooling airflow being used efficiently)?

Additionally, the user should be notified of other operational parameters (e.g., cooler temperatures and pressure drop) which suggest unrealistic or non-ideal performance even if IT equipment is effectively and efficiently cooled. The questions above are answered, in some embodiments, by the assessments of, for example, the first three metrics listed in the dashboard of FIG. 3; these assessments are hyperlinks which provide additional layers of information when clicked. The additional layers of information may include, for example, Air Supply, Total Heat Load, and Whitespace Area, that, in some embodiments, are presented to the user and are useful even prior to the CFD analysis. The overall IT room Cooling Efficiency metric answers the third question above and the Cooler Cooling Check alerts the user to unexpected cooling-unit operational parameters.

### Cooler Cooling Check

The Cooler Cooling Check (the Cooler ΔT Check or the cooler Cooling Efficiency check in different embodiments) graphically displays a "good" (e.g., a green checkmark graphic) or "warning" (e.g., a yellow exclamation point graphic) assessment on each cooler (and is displayed simultaneously with the IT Rack Cooling Check) as shown in the example of FIG. 3. The graphical display is shown automatically following a CFD analysis and may also be toggled "on" or "off' by the user as desired. The Cooler Cooling Check is in one embodiment a composite metric compromised of the sub-metrics Supply Temperature, Average Return Temperature, Temperature Drop, and Pressure Drop. In other embodiments, the Cooler Cooling Check is based on load to a cooler.

Coolers may display warnings if they are being either inefficiently utilized or excessively loaded. In some embodiments, the assessment is based on the cooler load which is the rate of heat removal from the data center by the cooler, e.g., in kW. If the load is too low then the cooler is simply recirculating its own cool supply air or that from other coolers - and operation will be inefficient. In this case, it may be better to simply turn off the cooler to save energy. If the load is too high, the capacity (i.e., the maximum heat removal rate under given conditions) of the unit may be reached and the cooler may not be able to meet the desired supply setpoint temperature. The low and high-load warning thresholds may be
chosen as being associated with, for example, a 5° and 20° C temperature drop across the cooler, respectively. Temperature-based thresholds may be used universally and then the specific load limits for each cooler may be determined because coolers come in many different sizes with capacities ranging from about 20-300+kW. A temperature drop is equivalent to a load (e.g., in kW) per airflow rate (e.g., in cfm). So, thresholds defined in terms of a temperature drop work for all coolers.

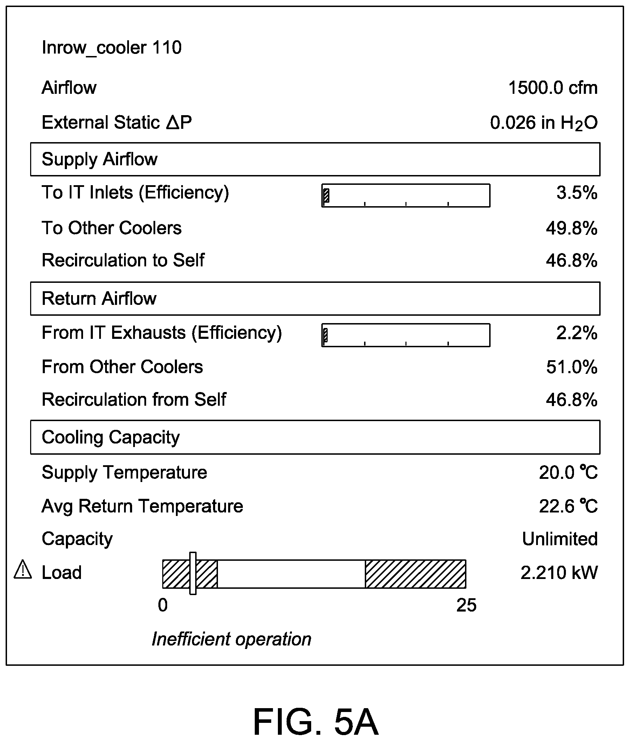

If one were to hover the mouse over a particular cooling unit in the dashboard GUI, for example, one showing a warning, a popup window may be presented to the user in the dashboard GUI that provides the user with information regarding what caused the cooling unit to be considered in a warning state. The information present may vary depending on whether the cooler has a known (specified) cooling capacity (in kW) or whether the cooler has an unknown cooling capacity in which case the cooler is modelled as having an unlimited cooling capacity. FIG. 5A illustrates one example of a popup window that indicates that the cooler of interest, modelled as having unlimited cooling capacity, is operating under a low load condition, defined in this example as operating with a load associated with a cooler ΔT (Average Return Temperature - Supply Temperature) of less than 5°C. The shaded grey portions of the "Load" bar chart correspond to operating conditions in which the cooler load value is considered outside of a desired or expected range. In the example of FIG. 5A, the cooler ΔT value is 2.6°C, which is achieved with a load within the lower shaded region of the load bar chart. This is indicative of the cooler being inefficiently utilized and that a user may consider whether it should be relocated to another area in which it would be more efficiently utilized or simply shut off. The other metrics shown in the popup window of FIG. 5A may be used by a user to determine what actions might be useful to take to remediate the warning condition.

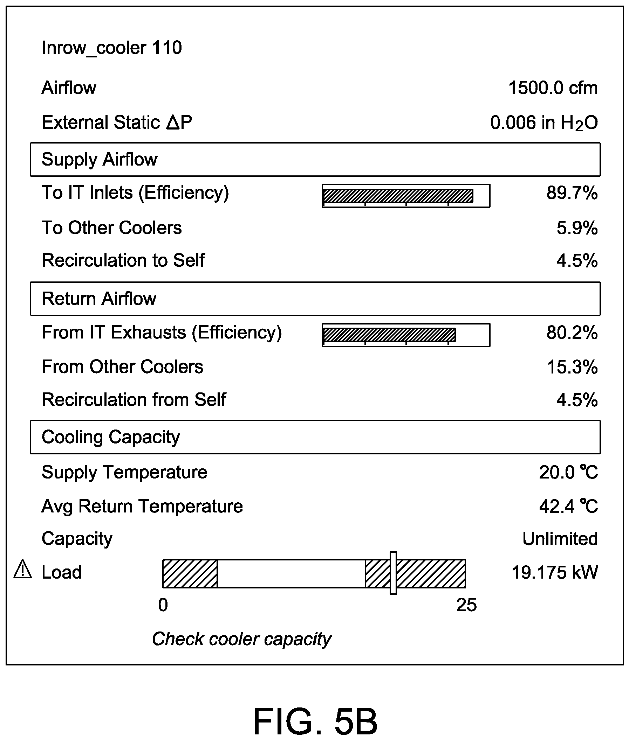

FIG. 5B illustrates a popup window providing information about a cooler in a warning condition that is modelled as having unlimited capacity, but is in a warning condition because it is experiencing a high load. As illustrated, the cooler load of 19.175 kW corresponds to a ΔT of 22.4°C, which is greater than the 20°C limit.

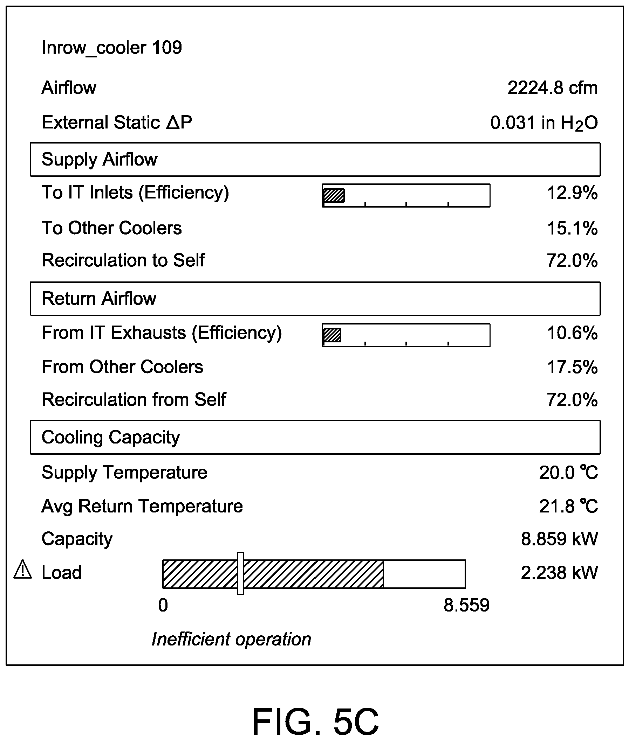

FIG. 5C illustrates a popup window providing information about a cooler in a warning condition that is modelled as having a specified capacity. Under the current operating conditions this capacity is 8.859 kW. The Load bar chart illustrates actual load on the cooler. The range of load that would result in a low load warning condition is the amount of operational load on the cooler that would result in a cooler ΔT value of 5°C or less. In the example of FIG. 5C it can be seen that the cooler ΔT is 1.8°C and so the corresponding load falls within the shaded portion of the Load bar chart. This cooler is not being efficiently utilized.

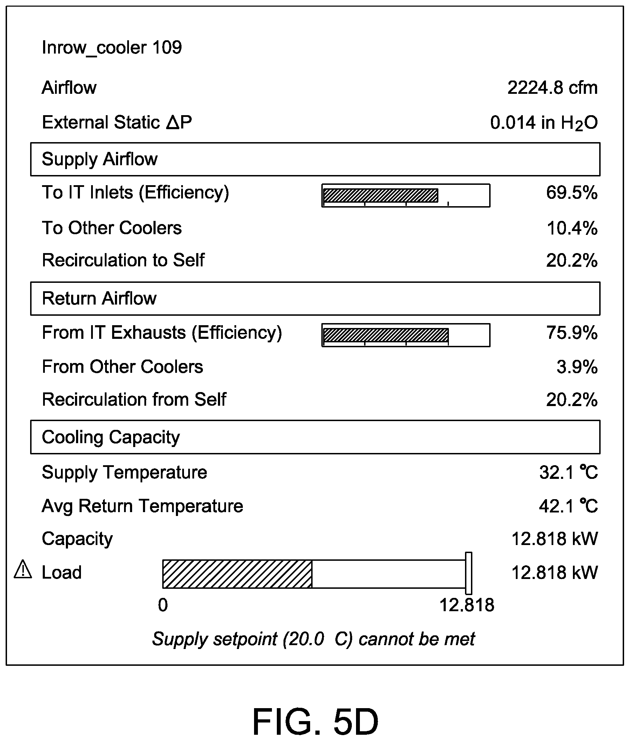

FIG. 5D illustrates a popup window providing information about a cooler in a warning condition that is modelled as having a specified finite capacity. In the example of FIG. 5D the cooler ΔT is 10°C but the cooler is outputting air at 32.1°C which is well above the desired supply temperature of 20°C. The cooler is operating at maximum load and yet is unable to meet the desired supply temperature. The cooler is thus in a warning condition due to a high load warning.

The Supply Temperature metric (displayed in the graphical user interface as illustrated in FIGS. 5A-5D, for example) is typically only assessed if a user has specified a cooler capacity which varies with return temperature. In such implementations, it is possible that the actual cooler supply temperature will exceed the (desired) setpoint temperature. In some embodiments, if this occurs a "warning" is shown - although this does not necessarily imply ineffective or inefficient cooling.

The Average Return Temperature metric (displayed in the graphical user interface as illustrated in FIGS. 5A-5D, for example) is, in some embodiments, assessed with a "warning" if the return temperature is too high relative to a user-set or default threshold (e.g., 50°C). Most cooling units have a maximum return temperature defined by their vendors to protect sensitive electronics and other components in the return airstream. Additionally, an unreasonably high temperature may alert the user to a possible modeling error.

The External Static Pressure Drop metric (ΔP, displayed in the graphical user interface as illustrated in FIGS. 5A-5D, for example) is the average pressure drop from cooler supply to cooler return terminals. In some embodiments, a warning may be issued if this value exceeds a user-defined or default threshold (e.g., 25 Pa) as this may indicate an unrealistic scenario or modeling error.

The final Cooler Cooling Check for each cooler is determined by the worst-case rating of the metric or metrics used in the particular embodiment of the data center cooling efficiency analysis tool.

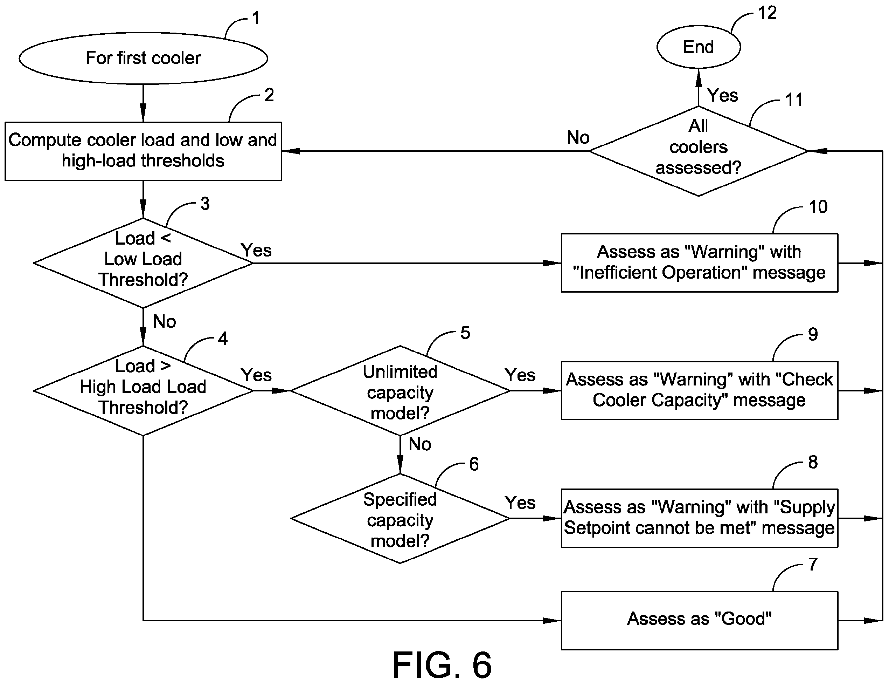

A process for computing cooler assessments is illustrated in the flowchart of FIG. 6. We assume that a CFD analysis has been conducted so that all relevant airflows and temperatures are known. The process begins in act 1 in which a first cooler is selected. In act 2 the cooler load is calculated based on the energy extraction rate required to reduce the airstream temperature from the return to the supply value. The low and high-load thresholds, which may be predetermined parameters, are also determined or computed. In act 3 the load on the cooler is compared to the low load threshold. If the load on the cooler is not below the low load threshold, the process proceeds to act 4 and the load on the cooler is compared to the high load threshold. If the load on the cooler is not above the high load threshold, the process proceeds to act 7 and the cooler is assessed as being in a "Good" state. If in act 3, the load on the cooler is determined to be below the low load threshold, the process proceeds to act 10 and the cooler is assessed to be in a "Warning" state and a window associated with the cooler may display a message such as "Inefficient operation" or another message to that effect. If in act 4, the load on the cooler is found to be above the high load threshold, the process proceeds to act 5 and a determination is made as to whether the cooler is modelled as having unlimited capacity. If the cooler is modelled as having unlimited capacity the process proceeds to act 9 and the cooler may be assessed as being in a "Warning" state and a window associated with the cooler may display a message such as "Check Cooler Capacity" or another message to that effect. If the cooler is determined in act 5 as not modelled as having unlimited capacity the process proceeds to act 6 and a determination is made if the cooler is modelled as having a specified capacity. If the cooler is determined to be modelled as having a specified capacity the process proceeds to act 8 and the cooler may be assessed as being in a "Warning" state and a window associated with the cooler may display a message such as "Supply Setpoint Cannot Be Met" or another message to that effect. After any of acts 7-10 a determination is made in act 11 if all coolers have been assessed. If so, the process terminates in act 12. If all coolers have not yet been assessed, a next cooler to be assessed is selected and the process returns to act 2 for assessment of the next cooler.

### Cooler Efficiency Metric

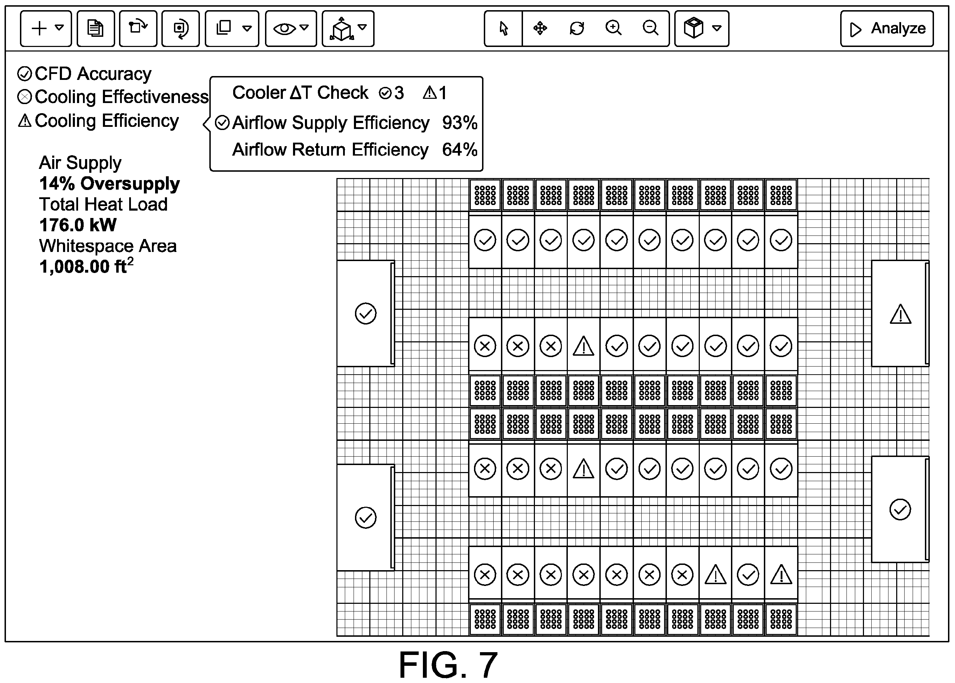

In embodiments including a Cooling Efficiency hyperlink such as illustrated in FIG. 3, if the Cooling Efficiency hyperlink in the dashboard is clicked or otherwise selected, additional information is shown, for example, as illustrated in FIG. 7. In this example, the Cooler ΔT Check, the Cooling Airflow Supply Efficiency, and Cooling Airflow Return Efficiency metrics are all shown; however, only the Cooler ΔT Check and Cooling Airflow Supply Efficiency metrics are assessed and rolled-up into the overall IT room Cooling Efficiency metric. For the Cooler ΔT Check, the number of coolers in each assessment category are displayed. In this example, the Cooling Airflow Return Efficiency is not assessed either because the user has made this choice explicitly or this choice has been inferred automatically based on the model created by the user. For the raised-floor-architecture example of FIG. 7, the return airflow is "through the room"; airflow mixing is expected and tolerated regardless of the numerical value of the Airflow Return Efficiency.

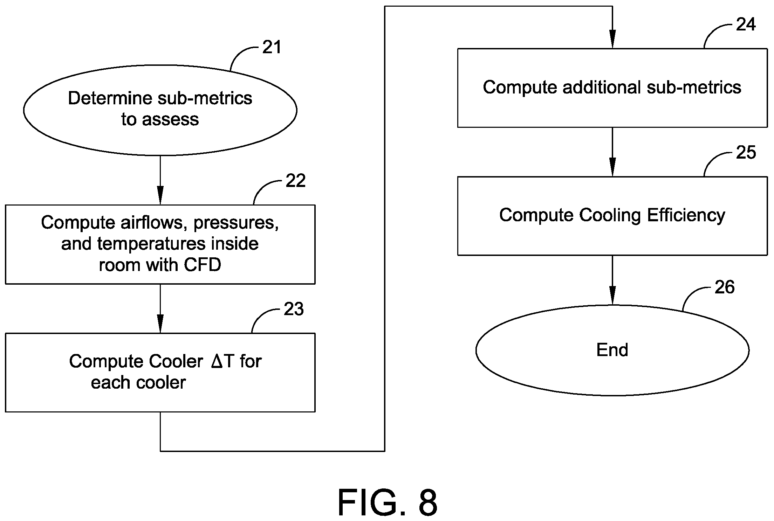

FIG. 8 is a flowchart showing an example of a process for computing overall IT room Cooling Efficiency in accordance with one embodiment. The sub-metrics to be assessed (along with the Cooler ΔT) are explicitly or implicitly specified by the user. Following the initial CFD analysis which yields airflow patterns, temperatures, and pressures, additional metrics are computed and those to be assessed are rolled-up into the Cooling Efficiency assessment along with the Cooling Check. In act 21 of the flowchart of FIG. 8 the sub-metrics that are to be assessed are determined, for example, based on user input. In act 22, a CFD analysis of the IT room is performed to determine airflows, pressures, and temperatures throughout the IT room. In act 23, the Cooler ΔT sub-metric is assessed for each cooler in the IT room based on the results of the CFD analysis. In act 24 any additional sub-metrics selected to be assessed, for example, Cooling Airflow Supply Efficiency, and Cooling Airflow Return Efficiency are determined from the results of the CFD analysis. In act 25 a value for the overall IT room Cooling Efficiency metric is determined based on the values of each of the assessed sub-metrics. The process ends in act 26.

### Cooling Airflow Supply Efficiency and Cooling Airflow Return Efficiency

Cooling Airflow Supply Efficiency and Cooling Airflow Return Efficiency are optional sub-metrics of the overall IT room Cooling Efficiency metric in some embodiments. Cooling Airflow Supply Efficiency is defined as the fraction of cooler supply airflow which is delivered directly to IT inlets. Cooling Airflow Return Efficiency is defined as the fraction of cooler return airflow which is captured directly from IT exhausts.

The use of the term "directly" means the air cannot pass through other IT equipment, cooling units, etc. (capable of providing heating or cooling of the airstream) along its path between cooling units and IT equipment.

Before detailing how Cooling Airflow Supply Efficiency and the Cooling Airflow Return Efficiency are computed, the following discussion describes how one may distinguish between IT equipment and racks and how they are modeled in CFD. Racks house IT equipment and are a convenient layer of abstraction when designing data centers. However, it is ultimately the IT equipment that must be cooled. There are two common approaches for modeling IT equipment housed in racks. The IT equipment inlet and exhaust terminals may be explicitly modeled (along with other details) inside the rack as part of the CFD model created by the user or abstracted into a "compact rack" model which is typically "built in" by the CFD developers of the CFD software. The advantage of the compact model approach is that it can accurately model important internal-rack characteristics without (significantly) detracting from the speed and robustness of the CFD simulation. Methods for computing Cooling Airflow Supply Efficiency and Cooling Airflow Return Efficiency when IT equipment terminals are either explicitly represented in CFD or abstracted into a compact rack model are presented below.

### Computing Cooling Airflow Supply Efficiency and Cooling Airflow Return Efficiency with IT Equipment Terminals Explicitly Represented in CFD

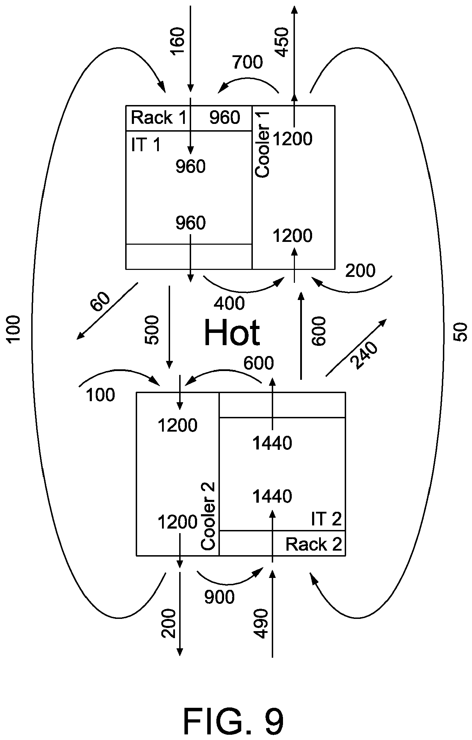

The scenario in which all IT equipment terminals are explicitly modeled by the user in CFD is exemplified by the simple data-center example shown in FIG. 9. There are two row coolers and two IT racks bounding a common hot aisle. The two racks contain explicit representations of IT equipment (IT1 and IT2) with inlet and exhaust terminals located towards the front and rear faces of the rack, respectively. The CFD model computes all airflows, temperatures, etc. throughout the room and inside the rack adjacent to the IT equipment inlets and exhausts. For this simple example, the IT equipment inlet and exhaust airflows are identical to the rack inlet and exhaust airflows. However, the method described here applies to any IT equipment whose inlets and outlets are explicitly defined in the CFD model.

The numerical values in FIG. 9 represent volumetric airflow rates; the units are unimportant as only the relative values are utilized. The airflow paths shown are either directly between coolers and IT equipment or between equipment and the surrounding environment. The Cooling Airflow Supply Efficiency and Cooling Airflow Return Efficiency, designated by *η_{S}* and *η_{R}*, respectively, may be computed from their definitions: ${η}_{S} = \frac{IT inlet airflow directly from coolers}{Cooler airflow} = \frac{700 + 100 + 900 + 50}{1200 + 1200} = 72.9 %$ ${η}_{R} = \frac{IT exhuast airflow directly to coolers}{Cooler airflow} = \frac{500 + 400 + 600 + 600}{1200 + 1200} = 87.5 %$

The key airflow patterns depicted in FIG. 9 are not computed directly by the CFD simulation (or practical to measure for that matter). However, airflow patterns may be tracked in CFD using "concentrations" which act as a "numerical smoke source." The concentrations are given the same physical properties (density, viscosity, etc.) as the surrounding air so that the numerical smoke source doesn't have any effect on airflow patterns. To compute Cooling Airflow Supply Efficiency, the concentration at all cooler supplies are set to C=1 (i.e., 100% numerical smoke) and the resulting distribution of C throughout the room is then solved for via CFD. The Cooling Airflow Supply Efficiency may be computed from: ${η}_{S} = \frac{{\sum }_{i = 1}^{n} {C}_{i}^{ITI} {Q}_{I}^{IT}}{{\sum }_{j = 1}^{N} {Q}_{j}^{C}} = \frac{\left(\frac{700 + 100}{960}\right) \left(960\right) + \left(\frac{900 + 50}{1440}\right) \left(1440\right)}{1200 + 1200} = 72.9 %$ where ${C}_{i}^{ITI}$ is the average concentration at IT equipment inlet *i*, ${Q}_{i}^{IT}$ is the airflow rate of IT equipment *i*, ${Q}_{j}^{C}$ is the airflow rate of cooler *j,* and *N* is the number of coolers.

To compute the Cooling Airflow Return Efficiency, the concentration at all IT exhausts is set to *C* = 1 and again the resulting distribution of *C* throughout the room is solved for via CFD. The Cooling Airflow Return Efficiency may be calculated from: ${η}_{R} = \frac{{\sum }_{j = 1}^{N} {C}_{j}^{CR} {Q}_{j}^{C}}{{\sum }_{j = 1}^{N} {Q}_{j}^{C}} = \frac{\left(\frac{600 + 400}{1200}\right) \left(1200\right) + \left(\frac{500 + 600}{1200}\right) \left(1200\right)}{960 + 1440} = 87.5 %$ where ${C}_{j}^{CR}$ is the average concentration at cooler return *j.* Note that in Equations 3 and 4, the numerical values shown as fractions in the numerators correspond to *C* values computed directly by the CFD simulation. The *C* values may be computed manually based on mixing of the known airflow streams.

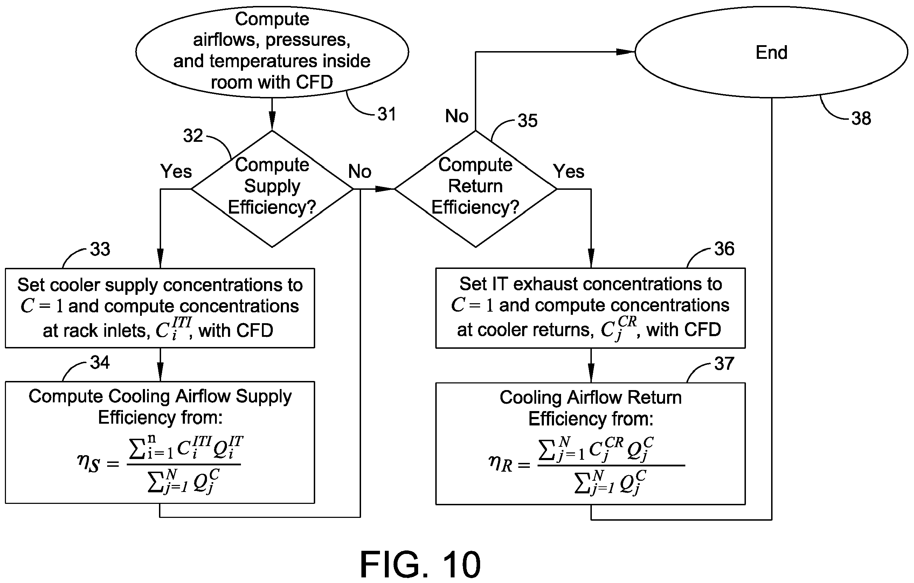

FIG. 10 shows the general process for computing Cooling Airflow Supply Efficiency and Cooling Airflow Return Efficiency when the IT equipment is modeled explicitly in CFD. In act 31 of FIG. 10 a CFD analysis is performed to determine airflows, temperatures, and pressures throughout the IT room. If Cooling Airflow Supply Efficiency has been selected by a user to be computed ("Yes" choice in act 32), in act 33 all cooler supply concentrations are set to 1 and the concentrations at the inlets of each item of IT equipment are calculated using CFD. In act 34, the Cooling Airflow Supply Efficiency is calculated using the concentrations at the IT equipment inlets and the other parameters in accordance with equation (3) above.

If Cooling Airflow Return Efficiency has been selected by a user to be computed ("Yes" choice in act 35), in act 36 all IT equipment exhaust concentrations are set to 1 and the concentrations at the returns of each cooler are calculated using CFD. In act 37, the Cooling Airflow Return Efficiency is calculated using the concentrations at the returns of each cooler and the other parameters in accordance with equation (4) above.

The process ends at act 38.

### Computing Cooling Airflow Supply Efficiency and Cooling Airflow Return Efficiency with Compact Rack Models in CFD

As discussed above, if a compact rack model is employed, the IT equipment inlets and exhausts are not explicitly represented in CFD but rather abstracted as part of a separate model. Yet, the computation of the Cooling Airflow Supply Efficiency and Cooling Airflow Return Efficiency must somehow extend "into the rack model." One possibility is to track concentrations directly into the compact rack model by periodically passing concentration values back and forth between the corresponding airflow boundaries of the CFD room and rack models; this is analogous to how temperature values are typically computed inside the rack model. However, as detailed below, there is another option which offers the benefit of eliminating the periodic passing of concentration values between the CFD room and compact rack models. It can be shown that the overall Cooling Airflow Supply Efficiency and Cooling Airflow Return Efficiency between the coolers and IT equipment inlets/exhausts are equal to the product of the same metrics computed between the coolers and the rack boundary and that between the rack boundary to IT equipment inlets/exhausts. This means that the inlets and exhausts of the compact rack model can be handled analogously to explicit IT equipment inlets and exhausts (discussed above) in the CFD room model while the impact of airflow patterns inside the rack may be handled separately from and following the completion of the CFD analysis.

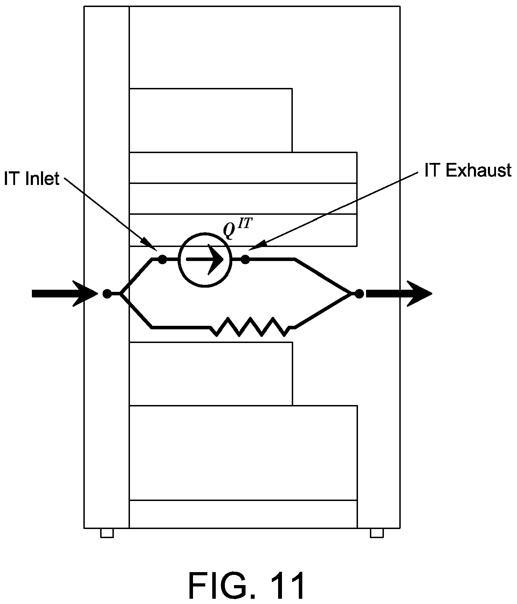

FIG. 11 shows a simplified version of the compact IT rack model employed in EcoStruxure^{™} IT Advisor CFD; airflow enters or exits the IT rack through the front (left) and rear (right) faces. Inside the rack, airflow is idealized as confined to a simple flow network consisting of IT fan airflow *Q^{IT}* in parallel with a flow resistance which models leakage airflow driven by pressure differences between the front and rear rack faces. The compact rack model communicates with the CFD model periodically so that the leakage airflow front-to-rear (in either direction) inside the rack is consistent with the pressure drop across the rack faces. This compact-modeling approach includes important physics like rack-leakage and distinguishes between IT equipment and rack inlets/exhausts.

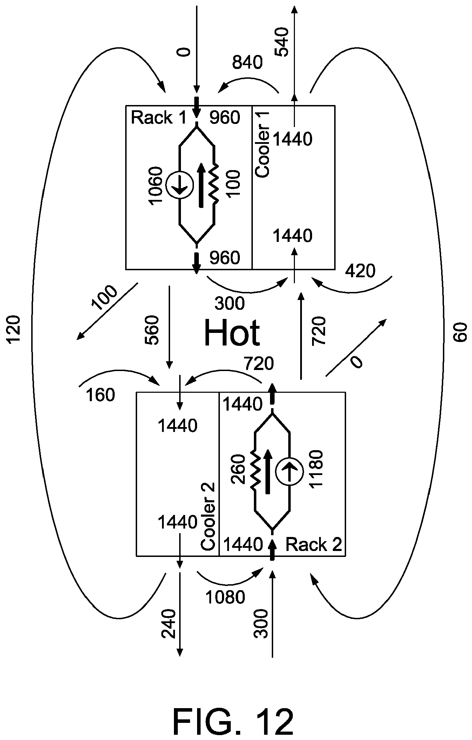

FIG. 12 shows a simple data center layout like that of FIG. 10 but with the explicit rack and IT equipment representations replaced by compact rack models. The latter follow the same idealization of airflow paths as discussed in the context of FIG. 11. Since the key airflows are again assumed to be known, the Cooling Airflow Supply and Return Efficiencies may be calculated from their definitions: ${η}_{S} = \frac{IT inlet airflow directly from coolers}{Cooler airflow} = \frac{\left(\frac{840 + 120}{1060}\right) \left(1060\right) + \left(\frac{1080 + 60}{1440}\right) \left(1180\right)}{1440 + 1440} = 65.8 %$ ${η}_{R} = \frac{IT exhuast airflow directly to coolers}{Cooler airflow} = \frac{\left(1\right) \left(300+560\right) + \left(\frac{1180}{1440}\right) \left(720+720\right)}{1440 + 1440} = 70.8 %$

Following the initial CFD room simulation, internal-rack airflows (as driven by pressures external to the rack) are known from the compact rack model. Concentrations are used to track airflows both inside (compact rack model) and outside (CFD) the rack. As mentioned above, these computations are separated so that the passing of concentration values between the compact rack and CFD models is not necessary during the CFD simulation. The concentration at IT inlet *i*, ${C}_{i}^{ITI}$, is determined from the compact rack model assuming the rack inlet airflow (e.g., through the front door) is at *C* = 1. In CFD, the cooler supplies are also set to *C* = 1 and the concentrations at each rack inlet *i*, ${C}_{i}^{RI}$*,* are determined. Ultimately, the Cooling Airflow Supply Efficiency is computed as: ${η}_{S} = \frac{{\sum }_{i = 1}^{n} {C}_{i}^{ITI} {C}_{i}^{RI} {Q}_{i}^{IT}}{{\sum }_{j = 1}^{N} {Q}_{j}^{C}} = \frac{\left(\frac{960}{1060}\right) \left(\frac{840 + 120}{960}\right) \left(1060\right) + \left(\frac{1180}{1180}\right) \left(\frac{1080 + 60}{1440}\right) \left(1180\right)}{1440 + 1440} = 65.8 %$

Note that the product ${C}_{i}^{ITI} {C}_{i}^{RI}$ can be thought of as the "net concentration" which ultimately reaches IT equipment inlet *i*. Indeed, if the data center model includes a mixed population in which some IT terminals are modeled explicitly while others are abstracted into compact models, Equation 3 or 7 could be employed with either ${C}_{i}^{ITI}$ (explicit IT) or ${C}_{i}^{ITI} {C}_{i}^{RI}$ (compact model) used in each term of the summation as applicable.

A similar process is followed to compute the Cooling Airflow Return Efficiency. Following the initial CFD room simulation, internal-rack airflows are known from the compact rack model, and concentrations are used to track airflows both inside (compact rack model) and outside (CFD) the rack. The concentration at rack exhaust *i*, ${C}_{i}^{RE}$, is computed assuming the exhaust from IT equipment inside the compact rack model is at *C* = 1. For the present example, these are ${C}_{1}^{RE} = \frac{960}{960} = 1$ and ${C}_{2}^{RE} = \frac{1180}{1440} = 0.819$. These values of ${C}_{i}^{RE}$ are then used as rack exhaust concentrations in CFD from which the concentrations at cooler returns are determined. The Cooling Airflow Return Efficiency is then computed as: ${η}_{R} = \frac{{\sum }_{j = 1}^{N} {C}_{j}^{CR} {Q}_{j}^{C}}{{\sum }_{j = 1}^{N} {Q}_{j}^{C}} = \frac{\left(\frac{\left(1\right) \left(300\right) + \left(0.819\right) \left(720\right)}{1440}\right) \left(1440\right) + \left(\frac{\left(1\right) \left(560\right) + \left(0.819\right) \left(720\right)}{1440}\right) \left(1440\right)}{1440 + 1440} = 70.8 %$

Note that Equation 8 (compact racks) is identical to Equation 4 (explicit IT). The difference in the numerical result is due to the fact that with explicit IT representations, the IT exhaust concentration is always set to *C* = 1 in CFD. With compact rack models, the rack exhaust concentration is, in general, not set to *C* = 1 and may be less than one due to recirculation inside the rack. Again, for a mixed population of explicitly represented IT terminals and compact racks, Equation 8 or 4 can be directly used as long as the appropriate IT equipment exhaust (explicit IT) and rack exhaust (compact racks) concentrations have been set as applicable in the CFD model.

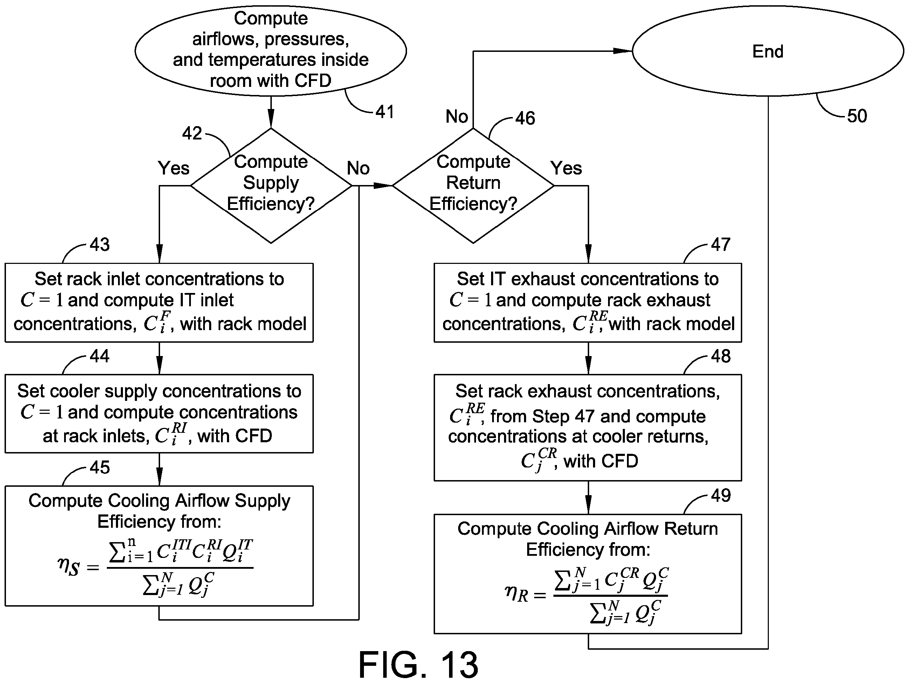

FIG. 13 shows the general process for computing Cooling Airflow Supply Efficiency and Cooling Airflow Return Efficiency when compact rack models are employed. In act 41 of FIG. 13 a CFD analysis is performed to determine airflows, temperatures, and pressures throughout the IT room. If the Cooling Airflow Supply Efficiency was selected by a user to be computed ("Yes" choice in act 42), at act 43 the concentrations at each rack inlet are set to 1 and the inlet concentrations at each item of IT equipment are computed with rack models. In act 44 the concentrations at each cooler supply are set to 1 and the concentrations at each rack inlet are computed via CFD. In act 45 the Cooling Airflow Supply Efficiency is calculated in accordance with equation (7) above.

If the Cooling Airflow Return Efficiency was selected by a user to be computed ("Yes" choice in act 46), at act 47 the exhaust concentrations at each item of IT equipment are set to 1 and the exhaust concentrations for each rack are computed with rack models. In act 48 the concentrations at each cooler return are computed via CFD. In act 45 the Cooling Airflow Return Efficiency is calculated in accordance with equation (8) above.

The process ends at act 50.

In embodiments above, processes and systems are provided that can determine cooling efficiency metrics in an IT room. The systems and methods can be used to provide optimized design of an IT room by using results of the systems and methods to change the actual layout and/or capacity of equipment or the proposed layout and/or capacity of equipment. In processes described above, values related to IT room cooling metrics may be determined. In at least some embodiments, the values determined are predictions for actual values that will occur in an IT room having the parameters modeled. In methods of at least one embodiment, after successful modeling and validation of cooling performance of an IT room, the results of the model may be used as part of a system to order equipment, ship equipment and install equipment in an IT room as per the designed layout.

In at least some embodiments discussed herein, calculations taking place in real-time refers to processes that are completed in a matter of a few seconds or less rather than several minutes or longer as can happen with complex calculations, such as those involving traditional or historical CFD model calculations.

In at least some embodiments described above, the design of an IT room and/or actual parameters in an IT room are altered based on predicted cooling efficiency metrics. For example, a user of the IT room design and management system may change the location of coolers or the types of coolers that are used in the actual layout of equipment or the proposed layout of equipment in the IT room. These alterations may be implemented to improve the cooling efficiency and/or may be implemented to provide cost and/or power savings when the performance is found to be within predetermined specifications. Further, based on determined cooling efficiency metrics, a data management system in accordance with one embodiment, may control one or more CRACs to adjust the airflow.

Based on the outputs of embodiments of the model disclosed herein one or more parameters of cooling and/or similar systems of an IT room may be adjusted, for example, to obtain more desirable cooling efficiency metrics within the IT room and/or for individual IT racks or coolers the IT room. These adjustments may be performed automatically by a computer system implementing aspects of the model or by a computer system receiving the outputs of the model from another computer system implementing the model. A computer system implementing embodiments of the model disclosed herein may provide outputs of the model for use by control systems and methods as described in U.S. Patent Application Serial No. 16/617,749.

The cooling-performance assessment may additionally or alternatively (for example, depending on whether the cooling-performance assessment is indicative of the IT rack cooling check[s], the cooling-efficiency metric, or both) be a function of inlet temperature, capture indices, and the specific data-center cooling architecture. At least by incorporating the captures indices and specific data-center cooling architecture in generating the cooling-performance assessment, more accurate information is provided in addition to an overall cooling-performance assessment rather than simply raw data or calculations. Moreover, information is displayed in an easily comprehensible format by displaying a GUI having representations of the IT devices in the IT room overlaid with representations of the cooling-performance-assessment classifications for each IT device. In some examples, the GUI may additionally display the cooling-efficiency metric for the IT room as a whole, which may be determined based on, and/or displayed along with, the cooling-performance-assessments for each IT device, the cooling-airflow-return efficiency, the cooling-airflow-supply efficiency, and/or the rack cooling metric. It is to be appreciated that, although certain examples are provided with respect to data centers, examples of the disclosure are more broadly applicable to other architectures and IT rooms involving heating and/or cooling technologies.

Current IT-room-design systems may therefore fail to provide an accurate or easily comprehensible assessment of IT-room cooling performance. Such systems may operate inefficiently, because extensive training and expertise is required, and less than all available information may be properly utilized in evaluating an IT room. Moreover, such systems may simply provide raw data or calculations rather than one or more overall cooling-performance assessments, which requires that a human user perform a subjective review of the data and calculations. The raw data or calculations of existing systems may not be displayed via an easily comprehensible GUI and therefore may require additional time and expertise to interpret.

This is a technical problem. An exemplary embodiment of an IT-room-design system includes one or more units of IT equipment, one or more cooling units, and at least one processor. The at least one processor is configured to determine, for each unit of IT equipment of the one or more units of IT equipment, an IT-equipment-cooling assessment, determine at least one of a cooling-airflow-return efficiency or a cooling-airflow-supply efficiency, the cooling-airflow-return efficiency being indicative of how efficiently the one or more cooling units capture air output by the one or more units of IT equipment and the cooling-airflow-supply efficiency being indicative of how efficiently the one or more cooling units provide air to the one or more units of IT equipment, determine, based on the IT-equipment-cooling assessment for each unit of IT equipment and based on the at least one of the cooling-airflow-return efficiency or the cooling-airflow-supply efficiency, a cooling-efficiency metric for the space, and display, via a user interface, an indicator of the cooling-efficiency metric for the space.

At least this foregoing combination of features comprises an IT-room-design system that serves as a technical solution to the foregoing technical problem. This technical solution is not routine and is unconventional. This technical solution is a practical application of the IT-room-design system that solves the foregoing technical problem and constitutes an improvement in the technical field of IT-room-design visualization at least by providing a more accurate cooling-performance assessment, additional information related to the cooling-performance assessment, and a more easily comprehensible cooling-performance-assessment display.

In at least some embodiments described above, tools and processes are provided for determining cooling efficiency metrics in an IT room. In other embodiments, the tools and processes may be used in other types of facilities, and may also be used in mobile applications, including mobile IT rooms. Further, processes and systems in accordance with embodiments described herein may be used in overhead air plenums, and other types of air plenums.

Further examples are provided in the following clauses.

Clause 1. A non-transitory computer readable media having instructions encoded therein which,
when executed by a computer processing system, cause the computer processing system to
perform a method comprising:
   receiving information indicative of coolers and information technology (IT) racks in an IT room;
   displaying a representation of the coolers and IT racks in a graphical user interface (GUI) of a computer system;
   performing a computational fluid dynamics (CFD) analysis to calculate results including airflow patterns, temperatures, and pressures in the IT room;
   determining, based on the CFD results, a load on each cooler in the IT room; and
   for each of the coolers in the IT room, displaying a graphical indication for the representation of each respective cooler of whether a Cooling Efficiency metric for that cooler is in a first or a second state based on the load on that cooler.

Clause 2. The computer readable media of clause 1, wherein one of the first or the second state is a "Good" state and the other of the first or the second state is a "Warning" state.

Clause 3. The computer readable media of clause 1, wherein the instructions, when executed by the computer processing system, further cause the computer processing system to display a selector within the GUI which, if selected by a user, presents an indication of an overall cooler airflow efficiency for the IT room within the GUI.

Clause 4. The computer readable media of clause 1, wherein the instructions, when executed by the computer processing system, further cause the computer processing system to present and indication of an overall cooling airflow efficiency metric for the IT room as having an acceptable value in response to determining that all coolers in the IT room exhibit acceptable loads.

Clause 5. The computer readable media of clause 1, wherein the instructions, when executed by the computer processing system, further cause the computer processing system to select a value of the Cooling Efficiency metric for each cooler from two possible values.

Clause 6. The computer readable media of clause 1, wherein the instructions, when executed by the computer processing system, further cause the computer processing system to cause additional information from which the value of the Cooling Efficiency metric for a cooler is determined to be displayed responsive to a user selecting the cooler in the GUI, the additional information including one or more of average return air temperature for the cooler, supply air temperature for the cooler, a difference between average return air temperature and supply air temperature for the cooler, or pressure drop across the cooler.

Clause 7. The computer readable media of clause 1, wherein the instructions, when executed by the computer processing system, further cause the computer processing system to cause a load on a cooler to be displayed responsive to a user selecting the cooler in the GUI.

Clause 8. The computer readable media of clause 1, wherein the instructions, when executed by the computer processing system, further cause the computer processing system to cause a load on a cooler relative to an acceptable range of loads to be displayed responsive to a user selecting the cooler in the GUI.

Clause 9. The computer readable media of clause 1, wherein the instructions, when executed by the computer processing system, further cause the computer processing system to cause a load on a cooler relative to a lower unacceptable range of loads and to an upper unacceptable range of loads to be displayed responsive to a user selecting the cooler in the GUI if the cooler is modelled as having unlimited capacity.

Clause 10. The computer readable media of clause 1, wherein the instructions, when executed by the computer processing system, further cause the computer processing system to cause a load on a cooler relative to a lower unacceptable range of loads to be displayed responsive to a user selecting the cooler in the GUI if the cooler is modelled as having a specified capacity.

Clause 11. The computer readable media of clause 1, wherein the instructions, when executed by the computer processing system, further cause the computer processing system to cause a supply temperature and an average return temperature of a cooler relative to be displayed responsive to a user selecting the cooler in the GUI.

Clause 12. The computer readable media of clause 1, wherein the instructions, when executed by the computer processing system, further cause the computer processing system to cause a pressure drop across a cooler to be displayed responsive to a user selecting the cooler in the GUI.

Clause 13. The computer readable media of clause 1, wherein the instructions, when executed by the computer processing system, further cause the computer processing system to determine a Cooling Airflow Supply Efficiency sub-metric, the Cooling Airflow Supply Efficiency sub-metric being an overall fraction of airflow from coolers in the IT room being directly supplied to IT equipment inlets.

Clause 14. The computer readable media of clause 13, wherein the instructions, when executed by the computer processing system, further cause the computer processing system to include the Cooling Airflow Supply Efficiency sub-metric as a factor in determining a value of an overall cooling efficiency metric for the IT room.

Clause 15. The computer readable media of clause 13, wherein the instructions, when executed by the computer processing system, further cause the computer processing system to assign the overall cooling efficiency metric an acceptable value only if the Cooling Airflow Supply Efficiency sub-metric is evaluated to have an acceptable value.

Clause 16. The computer readable media of clause 13, wherein the instructions, when executed by the computer processing system, further cause the computer processing system to assign a non-binary numerical value to the Cooling Airflow Supply Efficiency sub-metric.

Clause 17. The computer readable media of clause 1, wherein the instructions, when executed by the computer processing system, further cause the computer processing system to determine a Cooling Airflow Return Efficiency sub-metric.

Clause 18. The computer readable media of clause 17, wherein the instructions, when executed by the computer processing system, further cause the computer processing system to include the Cooling Airflow Return Efficiency sub-metric as a factor in determining a value of an overall cooling efficiency metric for the IT room.

Clause 19. The computer readable media of clause 17, wherein the instructions, when executed by the computer processing system, further cause the computer processing system to assign the overall cooling efficiency metric an acceptable value only if the Cooling Airflow Return Efficiency sub-metric is evaluated to have an acceptable value.

Clause 20. The computer readable media of clause 17, wherein the instructions, when executed by the computer processing system, further cause the computer processing system to assign a non-binary numerical value to the Cooling Airflow Return Efficiency sub-metric.

Clause 21. The computer readable media of clause 1, wherein the instructions, when executed by the computer processing system, further cause the computer processing system to assess an Average Return Temperature metric for a cooler as unacceptable and issue a warning if return temperature of air to the cooler is above a defined threshold.

Clause 22. The computer readable media of clause 1, wherein the instructions, when executed by the computer processing system, further cause the computer processing system to assess a Pressure Drop sub-metric for a cooler as unacceptable and issue a warning if an average pressure drop from a return terminal to a supply terminal of the cooler is above a defined threshold.

Clause 23. A system comprising:
at least one processor coupled to at least one memory, wherein the at least one processor is configured to:
receive information indicative of coolers and information technology (IT) racks in an IT room;
display a representation of the coolers and IT racks in a graphical user interface (GUI) of a computer system;
perform a computational fluid dynamics (CFD) analysis to calculate results including airflow patterns, temperatures, and pressures in the IT room;
determine, based on the CFD results, a load on each cooler in the IT room; and
for each of the coolers in the IT room, display a graphical indication for the representation of each respective cooler of whether a Cooling Efficiency metric for that cooler is in a first or a second state based on the load on that cooler.

Clause 24. A method for assessing performance of coolers in an IT room, the method comprising:
receiving information indicative of coolers and information technology (IT) racks in an IT room;
displaying a representation of the coolers and IT racks in a graphical user interface (GUI) of a computer system;
performing a computational fluid dynamics (CFD) analysis to calculate results including airflow patterns, temperatures, and pressures in the IT room;
determining, based on the CFD results, a load on each cooler in the IT room; and
for each of the coolers in the IT room, displaying a graphical indication for the representation of each respective cooler of whether a Cooling Efficiency metric for that cooler is in a first or a second state based on the load on that cooler.

Having thus described several aspects of at least one embodiment, it is to be appreciated various alterations, modifications, and improvements will readily occur to those skilled in the art. Such alterations, modifications, and improvements are intended to be part of this disclosure and are intended to be within the scope of the aspects and embodiments disclosed herein. Accordingly, the foregoing description and drawings are by way of example only.

## Claims

1. A method for assessing performance of coolers in an IT room, the method comprising:
receiving information indicative of coolers and information technology (IT) racks in an IT room;
displaying a representation of the coolers and IT racks in a graphical user interface (GUI) of a computer system;
performing a computational fluid dynamics (CFD) analysis to calculate results including airflow patterns, temperatures, and pressures in the IT room;
determining, based on the CFD results, a load on each cooler in the IT room; and
for each of the coolers in the IT room, displaying a graphical indication for the representation of each respective cooler of whether a Cooling Efficiency metric for that cooler is in a first or a second state based on the load on that cooler.

2. The method of claim 1, further comprising, based on the Cooling Efficiency metric for each of the coolers being in said first or second state, relocating or rearranging each cooler and/or the information technology (IT) racks in the IT room and/or adjusting operating parameters of each cooler and/or the information technology (IT) racks to obtain desired temperatures of the information technology (IT) racks and cooling equipment efficiencies, thus improving the overall cooling or cooling efficiency in the IT room.

3. The method of claims 1 or 2, further comprising:
displaying a selector within the GUI which, if selected by a user, presents an indication of an overall cooler airflow efficiency for the IT room within the GUI; or
presenting an indication of an overall cooling airflow efficiency metric for the IT room as having an acceptable value in response to determining that all coolers in the IT room exhibit acceptable loads.

4. The method of any of the preceding claims, further comprising selecting a value of the Cooling Efficiency metric for each cooler from two possible values.

5. The method of any of the preceding claims, further comprising causing additional information from which the value of the Cooling Efficiency metric for a cooler is determined to be displayed responsive to a user selecting the cooler in the GUI, the additional information including one or more of average return air temperature for the cooler, supply air temperature for the cooler, a difference between average return air temperature and supply air temperature for the cooler, or pressure drop across the cooler.

6. The method of any of the preceding claims, further comprising causing;
a load on a cooler to be displayed responsive to a user selecting the cooler in the GUI; or
a load on a cooler relative to an acceptable range of loads to be displayed responsive to a user selecting the cooler in the GUI; or
a load on a cooler relative to a lower unacceptable range of loads and to an upper unacceptable range of loads to be displayed responsive to a user selecting the cooler in the GUI if the cooler is modelled as having unlimited capacity; or
a load on a cooler relative to a lower unacceptable range of loads to be displayed responsive to a user selecting the cooler in the GUI if the cooler is modelled as having a specified capacity.

7. The method of any of the preceding claims, further comprising causing;
a supply temperature and an average return temperature of a cooler relative to be displayed responsive to a user selecting the cooler in the GUI; or
a pressure drop across a cooler to be displayed responsive to a user selecting the cooler in the GUI.

8. The method of any of the preceding claims, further comprising determining a Cooling Airflow Supply Efficiency sub-metric, the Cooling Airflow Supply Efficiency sub-metric being an overall fraction of airflow from coolers in the IT room being directly supplied to IT equipment inlets.

9. The method of claim 8, further comprising;
including the Cooling Airflow Supply Efficiency sub-metric as a factor in determining a value of an overall cooling efficiency metric for the IT room, or
assigning the overall cooling efficiency metric an acceptable value only if the Cooling Airflow Supply Efficiency sub-metric is evaluated to have an acceptable value; or
assigning a non-binary numerical value to the Cooling Airflow Supply Efficiency sub-metric.

10. The method of any of the preceding claims, further comprising determining a Cooling Airflow Return Efficiency sub-metric.

11. The method of claim 10, further comprising:
including the Cooling Airflow Return Efficiency sub-metric as a factor in determining a value of an overall cooling efficiency metric for the IT room; or
assigning the overall cooling efficiency metric an acceptable value only if the Cooling Airflow Return Efficiency sub-metric is evaluated to have an acceptable value; or
assigning a non-binary numerical value to the Cooling Airflow Return Efficiency sub-metric.

12. The method of any of the preceding claims, further comprising:
assessing an Average Return Temperature metric for a cooler as unacceptable and issuing a warning if return temperature of air to the cooler is above a defined threshold; or
assessing a Pressure Drop sub-metric for a cooler as unacceptable and issuing a warning if an average pressure drop from a return terminal to a supply terminal of the cooler is above a defined threshold.

13. A non-transitory computer-readable medium storing thereon computer-executable instructions for controlling at least a system, the computer-executable instructions including instructions that instruct at least one processor to operate according to any of the above method claims 1 to 12.

14. A system comprising:
at least one processor coupled to at least one memory, wherein the at least one processor is configured to carry out the method of any of claims 1 to 12.

15. A computer program comprising instructions to cause the system of claim 14 to carry out the method of any of claims 1 to 12.
